(19) Europäisches Patentamt
European Patent Office
Office européen des brevets

(11) Veröffentlichungsnummer: **0 152 765**
**A2**

# (12) EUROPÄISCHE PATENTANMELDUNG

(21) Anmeldenummer: **85100434.1**

(22) Anmeldetag: **17.01.85**

(51) Int. Cl.⁴: **C 09 B 31/068**, D 06 P 1/04, C 10 L 1/22

(30) Priorität: **20.01.84 DE 3401881**

(43) Veröffentlichungstag der Anmeldung: **28.08.85 Patentblatt 85/35**

(84) Benannte Vertragsstaaten: **CH DE FR GB IT LI**

(71) Anmelder: **CASSELLA Aktiengesellschaft, Hanauer Landstrasse 526, D-6000 Frankfurt am Main 61 (DE)**

(72) Erfinder: **Bühler, Ulrich, Dr., Kastanienweg 8, D-8755 Alzenau (DE)**
Erfinder: **Hähnke, Manfred, Dr., Behring-Strasse 13, D-6233 Kelkheim (DE)**
Erfinder: **Bode, Albert, Finkenweg 1, D-6231 Schwalbach (DE)**
Erfinder: **Roth, Kurt, Breckenheimer Strasse 35, D-6238 Hofheim (DE)**

(74) Vertreter: **Urbach, Hans-Georg, Dr. et al, Hanauer Landstrasse 526, D-6000 Frankfurt am Main 61 (DE)**

## (54) Bisazofarbstoffe, Verfahren zu ihrer Herstellung und ihre Verwendung.

(57) Die Bisazofarbstoffe der Formel I

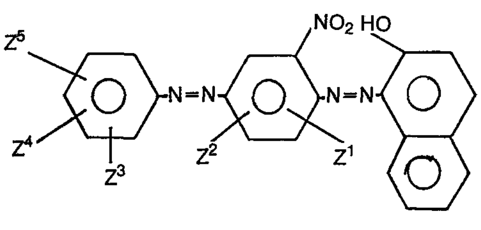

(I)

in der
$Z^1$, $Z^4$, $Z^5$ z.B. Wasserstoff, Fluor, Methyl, Ethoxy, Trifluormethyl, Cyan oder Nitro,
$Z^2$ z.B. Wasserstoff, Fluor, Methyl,
$Z^3$ z.B. Wasserstoff, Fluor, Alkyl, Cycloalkyl, Alkoxy, Trifluormethyl, Cyan oder Nitro,
bedeuten, eignen sich hervorragend zum Färben und Bedrucken von hydrophoben Fasermaterialien.

EP 0 152 765 A2

Erfinder: Dr. Bühler
Dr. Hähnke
Roth } Hoe
Bode

0152765

-1-

Kennwort: Bisazofarbstoffe mit β-Naphthol

Ref.3292
Dr.Eu/Ll

## Bisazofarbstoffe, Verfahren zu ihrer Herstellung und ihre Verwendung

Die Erfindung betrifft Bisazofarbstoffe der Formel I

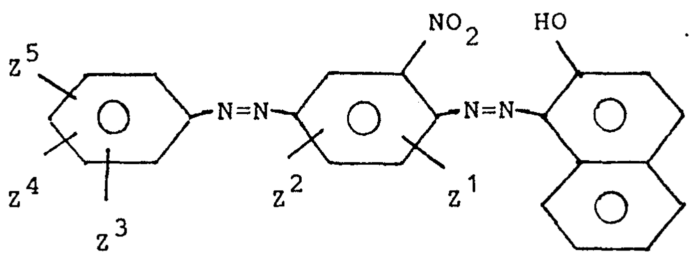

(I)

in der

$Z^1$, $Z^4$, $Z^5$ unabhängig voneinander Wasserstoff, Fluor, Chlor, Brom, Methyl, Ethyl, Methoxy, Ethoxy, Trifluormethyl, Cyan, -COOR, $-CONRR^1$, $-SO_2NRR^1$, $-SO_2R$, -COR oder Nitro,

$Z^2$ Wasserstoff, Fluor, Chlor, Brom, Methyl, Ethyl -COOR, oder $-CONRR^1$,

$Z^3$ Wasserstoff, Fluor, Chlor, Brom, Alkyl mit 1 bis 6 C-Atomen, Cycloalkyl mit 5 oder 6 C-Atomen, Alkoxy mit 1 bis 4 C-Atomen, Trifluormethyl, Cyan, -COOR, $-CONRR^1$, $-SO_2NRR^1$, $-SO_2R$, -COR oder Nitro,

R Wasserstoff, gegebenenfalls substituiertes Alkyl mit 1 bis 6 C-Atomen, Cycloalkyl mit 5 oder 6 C-Atomen, gegebenenfalls substituiertes Phenyl, Alkenyl mit 3 bis 5 C-Atomen,

$R^1$ Wasserstoff, gegebenenfalls substituiertes Alkyl mit 1 bis 6 C-Atomen, Alkenyl mit 3 bis 5 C-Atomen

bedeuten.

Die Erfindung betrifft ferner ein Verfahren zur Herstellung der Farbstoffe der Formel I und ihre Verwendung zum Färben und Bedrucken von hydrophoben Fasermaterialien und zum Färben von Mineralölprodukten, Wachsen, Öle, Fetten, Kunststoffen und Oberflächenbelägen.

Farbstoffe auf der Basis von ß-Naphthol mit 4-Amino-azobenzolen als Diazokomponente sind bereits bekannt. So werden die Farbstoffe C.I.Solvent Red 23, 24 und 27 mit p-Phenylazoanilin, 4-o-Tolylazo-o-toluidin bzw. Xylylazoxylidin als Diazokomponente zum Färben von Lösungsmitteln eingesetzt, und in der japanischen Patentanmeldung 21 512/65 wird ein Farbstoff der Formel II

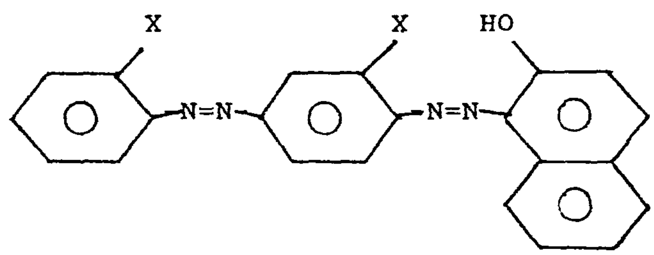

(II)

mit X = $-C_2H_5$ zum Färben von Polyolefinmaterialien beschrieben. Aus der DOS 27 16 674 sind Farbstoffmischungen zum Färben von Mineralölprodukten bekannt, die Farbstoffe der Formel II enthalten, bei denen X Wasserstoff oder Methyl bedeutet und bei denen der Naphtholkern auch bis zu sechs tert-Butylreste enthalten kann. Zum Färben von z.B. Mineralölprodukten sind aus der EU-A1-12 297 Farbstoffgemische bekannt, die z.B. Einzelfarbstoffe der Formel III

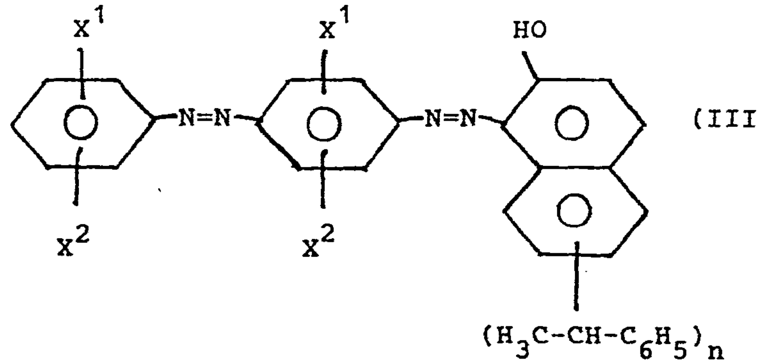

(III)

enthalten, bei denen $X^1$ und $X^2$ unabhängig voneinander Wasserstoff, $C_1$- bis $C_4$ Alkyl, Methoxy oder Ethoxy und n

eine der Zahlen 0, 1, 2 oder 3 bedeuten. Mit den bekannten Farbstoffen lassen sich zwar auch hydrophobe Fasermaterialien in roten Tönen färben, die Echtheiten dieser Färbungen sind jedoch ungenügend.

Es wurde nun überraschenderweise gefunden, daß sich diese Mängel in den Echtheiten, wie z.B. ungenügende Lichtechtheit, Thermofixierechtheit, Waschechtheit etc., beheben lassen, wenn die erfindungsgemäßen Farbstoffe eingesetzt werden.

Die in der Formel I für $Z^3$, R und $R^1$ stehenden Alkyl-, Alkoxy- und Alkenylreste können geradkettig oder verzweigt sein. Alkylreste mit 1 bis 4 C-Atomen werden bevorzugt.

Alkylreste, die für $Z^3$, R oder $R^1$ stehen können, sind beispielsweise: Methyl, Ethyl, n-Propyl, i-Propyl, n-Butyl, i-Butyl, sek-Butyl, tert-Butyl, n-Pentyl, 2-Methylbutyl, 2-Methylbutyl-2, 3-Methylbutyl, 3-Methylbutyl-2, n-Hexyl, 2-Methylpentyl-3, 2-Methylpentyl-4, 3-Methylpentyl-3, 4-Methylpentyl, 3-Ethylbutyl, 1,3-Dimethylbutyl.

Cycloalkylreste, die für $Z^3$ und R stehen können, sind Cyclopentyl und Cyclohexyl.

Alkoxyreste, die für $Z^3$ stehen können, sind z.B. Methoxy, Ethoxy, n-Propoxy, i-Propoxy, n-Butoxy, i-Butoxy, sek-Butoxy, tert-Butoxy.

Alkenylreste, die für R und $R^1$ stehen können, sind z.B. Allyl, Methallyl und Crotyl.

Falls die für R oder $R^1$ stehenden Alkylreste substituiert sind, sind in der Regel ein oder zwei Substituenten, vorzugsweise ein Substituent, vorhanden. Geeignete Substituenten für gegebenenfalls substituiertes Alkyl, das für $R^1$ oder R stehen kann, sind z.B. Phenyl, Cyan, Hydroxy, Alkoxy mit 1 bis 4 C-Atomen, Alkoxyalkoxy mit insgesamt bis zu 8 C-Atomen, Cycloalkoxy mit 5 oder 6 C-Atomen, Alkenyloxy mit 3 bis 5 C-Atomen, Phenoxy, Phenoxyalkoxy mit 2 bis 4 C-Atomen in der Alkoxygruppe, Alkanoyloxy mit 1 bis 4 C-Atomen im Alkanoylrest oder Halogen, wie Fluor oder insbesondere Chlor oder Brom.

Bevorzugte Substituenten an Alkylresten, die für R oder $R^1$ stehen können, sind Hydroxy, Alkoxy mit 1 bis 4 C-Atomen, Phenoxy, Phenyl oder Cyan.

Beispiele für geeignete Substituenten für eine Zweifachsubstitution der für R oder $R^1$ stehenden Alkylresten sind die Kombinationen Hydroxy/Halogen, Dihydroxy oder Hydroxy/Alkoxy oder Hydroxy/Phenoxy.

Auch die für R stehenden Phenylreste können substituiert sein, wobei normalerweise eine einfache oder doppelte Substitution in Betracht kommt. Die einfache Substitution ist bevorzugt. Geeignete Substituenten für eine einfache oder mehrfache Substitution des Phenylrestes sind z.B. Methyl, Ethyl, Halogen, Methoxy, Ethoxy, Nitro, Cyan, Trifluormethyl, wobei Methyl und Chlor bevorzugt sind.

Bevorzugt stehen die Reste $Z^1$ und $Z^2$ in o- und p-Stellung zur Nitrogruppe. Die besonders bevorzugte Position für den Rest $Z^1$ ist die p-Stellung zur Nitrogruppe.

Bevorzugte Reste $Z^1$ sind Fluor, Chlor, Brom, Methyl, Ethyl, Methoxy und Ethoxy. Ein besonders bevorzugter Rest $Z^1$ und ein bevorzugter Rest $Z^2$ ist Wasserstoff.

Die Reste $Z^3$ und $Z^4$ stehen bevorzugt in 2,4-, 2,5-, 3,4- oder 3,5-Stellung zur Azogruppe.

Bevorzugte Reste $Z^3$ sind Wasserstoff, Nitro, Fluor, Chlor, Brom, -COOR, $-CONRR^1$, Trifluormethyl , Methyl, Ethyl und $-SO_2R$.

Bevorzugte Reste $Z^4$ sind Fluor, Chlor, Brom, -COOR und $-CONRR^1$.

Ein bevorzugter Rest $Z^5$ und ein besonders bevorzugter Rest $Z^4$ ist Wasserstoff.

Bevorzugt haben höchstens 2 der Substituenten $Z^1$ bis $Z^5$ die Bedeutung Trifluormethyl, Cyan, -COOR, $-CONRR^1$, $-SONRR^1$, $-SO_2R$, -COR, Nitro oder Alkoxy mit 1 bis 4 C-Atomen und höchstens 3 der Substituenten $Z^1$ bis $Z^5$ die Bedeutung Hal oder Alkyl mit bis zu 6-C-Atomen.

Bevorzugte Kombinationen $Z^1$ bis $Z^5$ sind solche aus bevorzugten Resten $Z^1$ bis $Z^5$.

Bevorzugte Farbstoffe sind solche der Formel I, in der $Z^1$, $Z^2$, $Z^4$ und $Z^5$ Wasserstoff bedeuten und in der $Z^3$ in 2-, 3- oder 4-Stellung zur Azogruppe steht und die oben angegebenen bevorzugten Bedeutungen hat. Weitere bevorzugte Farbstoffe sind solche der Formel I, in der $Z^1$, $Z^2$ und $Z^5$ Wasserstoff bedeuten und in der $Z^4$ in 2- oder 3- und $Z^3$ in der 4-Stellung Stellung zur Azogruppe steht und in der $Z^3$ und $Z^4$ die oben angegebenen bevorzugten Bedeutungen haben, und solche der Formel I, in der $Z^1$, $Z^2$ und $Z^5$ Wasserstoff bedeuten und bei denen die Reste $Z^3$ und $Z^4$ in 2,5- oder 3,5-Stellung zur Azobrücke stehen und die oben angegebenen Bedeutungen haben.

Die erfindungsgemäßen Farbstoffe der Formel I können dadurch hergestellt werden, daß man ein Amin der Formel IV

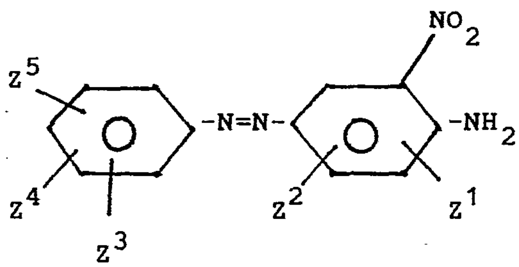

(IV)

diazotiert und auf ß-Naphthol kuppelt. Die Diazotierung des Amins der Formel IV geschieht in an sich bekannter Weise durch Einwirkung von salpetriger Säure oder salpetriger Säure abspaltenden Verbindungen. Beispielsweise können die Amine der Formel IV in Schwefelsäure, Salzsäure oder in niederen aliphatischen Carbonsäuren, die gegebenenfalls mit Wasser verdünnt werden können, wie z.B. Ameisensäure, Essigsäure oder Propionsäure, suspendiert oder gelöst und bei 0 bis $50^{o}C$ durch Zusatz von Nitrosylschwefelsäure oder Natriumnitrit diazotiert werden.

Die Kupplung wird üblicherweise in Wasser unter Zusatz einer Base durchgeführt, die für eine ausreichende Konzentration an Naptholat-Anionen sorgt. Basen, die hierfür bekannterweise eingesetzt werden, sind z.B. Alkalihydroxyde oder Alkalisalze schwacher Säuren, wie z.B. Natrium- oder Kaliumhydroxid, Soda, Pottasche oder auch Natriumhydrogencarbonat. Darüberhinaus werden zweckmäßigerweise Puffersubstanzen zugesetzt, die den Säureüberschuß der Diazoniumlösung und die bei der Kupplung frei werdende Säure abfangen. Solche Puffer sind bekanntlich ebenfalls vorzugsweise Alkalisalze schwacher Säuren, wie z.b. Natriumacetat oder Natriumhydrogenphosphat.

Die Kupplung kann auch in einer niederen aliphatischen Carbonsäure, wie z.B. Essigsäure, die zweckmäßigerweise mit Wasser verdünnt ist, bzw. in einer Mischung aus Wasser und einem in Wasser wenig löslichen Alkohol, wie n- oder i-Butanol, stattfinden. Zweckmäßigerweise wird auch dabei das System durch Basen, wie Natriumacetat oder

Natriumhydrogenphosphat, gepuffert. Die Kupplungstemperatur liegt in der Regel zwischen 0 und 30°C.

Die Amine der Formel IV sind bekannt oder können nach an sich bekannten Verfahren hergestellt werden. Derartige Verfahren sind z.B. beschrieben in Ber.Deutsch.Chem.Ges., 20 (1887), 2992f; Chem.Ber. 56 (1923), 2354f; J.Chem.Soc. (1954), 2023f; FR-PS 1 403 545; DE-OS 25 28 866 und Gaz. Chim.Ital. 53, 287.

Die erfindungsgemäßen Farbstoffe eignen sich insbesondere zum Färben und Bedrucken von hydrophoben Fasermaterialien, wie beispielsweise Polyamid, Cellulose-2 1/2-acetat, Cellulosetriacetat und insbesondere Polyestermaterialien, wie z.B. Polyethylenglykolterephthalat.

Sie liefern hierauf nach üblichen Färbe- und Druckverfahren farbstarke rote Färbungen und Drucke mit sehr guten Echtheitseigenschaften, insbesondere sehr guter Licht- und Thermofixierechtheit.

Das Färben der genannten Fasern, die einzeln oder im Gemisch mit anderen Faserarten, wie z.B. Baumwolle, regenerierten Cellulosefasern oder Wolle, vorliegen können, mit den erfindungsgemäßen Farbstoffen erfolgt in an sich bekannter Weise zweckmäßig aus wäßriger Suspension in Gegenwart von Carriern zwischen etwa 80 bis 110°C, in Abwesenheit von Carriern zwischen etwa 110 bis 140°C, sowie nach dem sogenannten Thermofixierverfahren bei etwa 180 bis 230°C. Das Bedrucken der genannten Materialien kann so durchgeführt werden, daß die mit den neuen Farbstoffen bedruckte Ware in Gegenwart eines Carriers bei Temperaturen zwischen etwa 80 bis 110°C oder auch in Abwesenheit eines Carriers bei etwa 110 bis 180°C gedämpft oder auch nach dem sogenannten Thermofixierverfahren bei etwa 180 bis 230°C behandelt wird.

Sofern Textilmaterialien gefärbt oder bedruckt werden sollen, die neben den genannten hydrophoben synthetischen Fasern noch natürliche Fasern, insbesondere die oben genannten, enthalten, können die erfindungsgemäßen Farbstoffe auch mit anderen Farbstoffklassen, wie z.B. Küpen-, Direkt- oder Reaktivfarbstoffen, gemeinsam eingesetzt werden.

Es ist daher in diesen Fällen möglich, auch Mischungen der erfindungsgemäßen Farbstoffe mit den anderen Farbstoffklassen zu applizieren und die Farbstoffe dann in an sich bekannter Weise gleichzeitig oder nacheinander zu fixieren.

Die erfindungsgemäßen Farbstoffe eignen sich auch zum Färben der vorstehend aufgeführten hydrophoben Materialien aus organischen Lösungsmitteln und zum Färben in der Masse.

Die Farbstoffe der Formel I eignen sich auch zum Färben von organischen Lösungsmitteln, Mineralölprodukten, Wachsen, Ölen, Fetten, Kunststoffen und Oberflächenbelägen, da sie in diesen Medien eine hohe Löslichkeit, hohe Farbstärke und gute Echtheiten, insbesondere gute Lichtechtheit besitzen.

Organische Lösungsmittel, die mit den Farbstoffen der Formel I gefärbt werden können, sind z.B. Alkohole, wie z.B. Ethanol, Propanol, iso-Propanol, Butanol, i-Butanol, tert-Butanol; Ester, wie z.B. Essigsäure-ethyl-, -propyl- oder -butyl-ester, Essigsäure-methoxy-ethyl-ester; Phthalsäure-dibutyl-ester, Phthalsäure-diethylhexylester; Ketone, wie z.B. Aceton, Methyl-ethyl-keton, Diethyl-keton; Glykole und Glykolether, wie z.B. Methylglykol, Ethylglykol, Methyldiglykol, Butyldiglykol; aromatische Kohlenwasserstoffe, wie z.B. Toluol oder Xylole. Produkte, welche die vorgenannten Substrate enthalten und

die demgemäß mit den Farbstoffen der Formel I gefärbt werden können, sind z.B. Druckfarben, Schreibtinten, Lacke, wie z.B. Transparentlacke für den Flexodruck. Anfärbbare Mineralölprodukte sind z.B. Diesel- und Heizöle. Kunststoffe, die in der Masse gefärbt werden können, sind z.B. Polyvinylchlorid, Styrol-Butadiengemische, Acrylnitril-Butadiengemische, vor allem aber Polyolefine, wie Polyethylen, Polypropylen, vorzugsweise Polystyrol. Beim Massefärben der genannten Kunststoffe in an sich bekannter Weise werden Färbungen mit hohen Farbstärken und ausgezeichneten Echtheiten, insbesondere hervorragender Licht- und Wetterechtheit, erhalten. Es können auch Mischungen von zwei oder mehreren der Farbstoffe der Formel I verwendet werden. In der Regel liegt dabei der Anteil der Einzelfarbstoffe in der Mischung bei 10 bis 90 Gew.%.

Die organischen Lösungsmittel, Mineralölprodukte, Wachse, Öle, Fette, Kunststoffe und Oberflächenbeläge werden mit den Farbstoffen der Formel I dadurch gefärbt, daß die genannten Materialien im flüssigen, geschmolzenen oder thermoplastischen Zustand, z.B. bei Temperaturen von 0 bis 250°C, vorzugsweise 10 bis 240°C, mit einem oder mehreren Farbstoffen der Formel I vermischt werden, wobei unter rascher Auflösung des Farbstoffs oder der Farbstoffe innerhalb weniger Sekunden bis Minuten die Färbung des Substrats eintritt. Zu färbende Substrate, die bei Umgebungstemperatur flüssig sind, wie z.B. organische Lösungsmittel, Mineralölprodukte (Benzine, Dieselöle, Heizöle etc.), Öle, Oberflächenbeläge (Lacke, Firnisse, Farbenetc.) werden in der Regel bei Temperaturen von 10 bis 30°C, vorzugsweise bei Umgebungstemperatur, mit dem Farbstoff der Formel I vermischt. Wachse schmelzen zum größten Teil bei Temperaturen von 50 bis 90°C und werden daher in der Regel bei dieser Temperatur mit den Farbstoffen der Formel I vermischt. Bei flüssigen Substraten wird der Farbstoff oder das Farbstoffgemisch in der Regel durch einfaches Einrühren mit dem flüssigen bzw. aufgeschmolzenen Substrat gemischt.

Die Färbung von Kunststoffen, insbesondere von Polystyrol, ist in verschiedenen Stadien der Kunststoffherstellung möglich, z.B. durch Färben der Monomeren vor der Polymerisation, Polykondensation oder Polyaddition. Normaler werden jedoch thermoplastische Kunststoffe während der Verarbeitung im thermoplastischen Zustand, z.B. auf dem Walzwerk, in der Knetschnecke, Strangpresse oder Schneckenspritzmaschine, mit dem Farbstoff oder Farbstoffgemisch bei Temperaturen bis 250°C, vorzugsweise bei Temperaturen bis 240°C, gemischt und dadurch eingefärbt. Bei diesem Vorgang können gleichzeitig auch Weichmachter, Stabilisatoren, Gleitmittel und/oder andere Hilfsmittel in den Kunststoff eingearbeitet werden. Danach wird der gefärbte Kunststoff in an sich bekannter Weise granuliert und an den Endverbraucher abgegeben. Thermoplastische Kunststoffe könne auch vom Endverbraucher nach dem sogenannten Trockenfärbeverfahren gefärbt werden. Hierbei werden farblose Kunststoffgranulate mit dem Farbstoff oder Farbstoffgemisch trocken gemischt und anschließend in der Spritzgußmaschine zu gefärbten Spritzgußteilen verarbeitet.

Die folgenden Ausführungsbeispiele veranschaulichen die Herstellung der erfindungsgemäßen Farbstoffe und Möglichkeiten zu ihrer Anwendung.

Beispiel 1

a) 24,2 g 4-Amino-3-nitro-azobenzol werden in 100 ml Eisessig durch Zutropfen von 33 g 40,5%iger Nitrosylschwefelsäure bei 15°C diazotiert. Die Diazolösung läßt man bei 0 bis 10°C in eine Lösung aus 15,8 g ß-Naphthol, 120 ml 1n Natronlauge, 70 g wasserfreiem Natriumacetat und 1000 g Eis/Wasser einlaufen. Nach beendeter Kupplung wird der entstandene Farbstoff abgesaugt, mit Wasser neutral und salzfrei gewaschen und unter vermindertem Druck

getrocknet. Man erhält auf diese Weise 38,8 g eines Farbstoffs der Formel I, bei der $Z^1$, $Z^2$, $Z^3$, $Z^4$ und $Z^5$ alle Wasserstoff bedeuten. Der Farbstoff besitzt einen Schmelzpunkt von 231 bis 235°C.

b) 0,5g des feindispergierten Farbstoffs des Beispiels 1a werden in 2000 g Wasser eingerührt. Dann wird die Dispersion mit Essigsäure auf einen pH-Wert von 4 bis 5 eingestellt und mit 4,0 g Ammoniumsulfat sowie 2,0 g eines handelsüblichen Dispergiermittels auf Basis eines Naphthalinsulfonsäure-Formaldehyd-Kondensats versetzt. In die so erhaltene Färbeflotte bringt man 100 g eines Polyestergewebes auf Basis von Polyethylenglykolterephthalat ein und färbt in einem Färbeautoklaven 1 Stunde bei 130°C. Nach anschließendem Spülen, reduktiver Nachbehandlung mit einer 0,2%igen alkalischen Natriumdithionitlösung während 15 Minuten bei 70 bis 80°C, Spülen und Trocknen, erhält man eine farbstarke, brillante rote Färbung mit sehr guten coloristischen Eigenschaften.

Beispiel 2

a) 25,6 g 4-Amino-3-nitro-3'-methylazobenzol werden wie in Beispiel 1a diazotiert und, auf ß-Naphthol gekuppelt, isoliert und getrocknet.

Man erhält so 39,0 g eines Farbstoffs der Formel I , bei der $Z^1$, $Z^2$, $Z^4$ und $Z^5$ alle Wasserstoff bedeuten und $Z^3$ Methyl bedeutet und in 3-Stellung zur Azobrücke steht. Der Farbstoff besitzt einen Schmelzpunkt von 177 bis 179°C.

b) 20,0 g des so erhaltenen Farbstoffs werden in feiner Verteilun g einer Druckpaste, die 45,0 g Johannisbrotkernmehl, 6,0 g 3-nitrobenzolsulfonsaures Natrium und 3,0 g Zitronensäure auf 1000 g enthält, einverleibt. Mit dieser Druckpaste erhält man auf einem Polyestergewebe nach dem Bedrucken, Trocknen und Fixieren im Thermofixierrahmen während 40 Sekunden bei 195°C, Spülen und Fertigstellung, wie in Beispiel 1 b eschrieben, einen farbstarken brillanten roten Druck mit sehr guten coloristischen Eigenschaften.

Analog den Beispielen 1 und 2 lassen sich z.B. die in den folgenden Tabellen aufgeführten erfindungsgemäßen Farbstoffe der Formel I herstellen, in der die Reste $Z^1$ bis $Z^5$ die aufgeführten konkreten Bedeutungen haben. In den folgenden Tabellen sind dabei für die Reste $Z^1$ und $Z^2$ die Positionen in bezug auf die Stellung ortho (= o), m (= m) oder para (= p) zur Nitrogruppe und für die Reste $Z^3$, $Z^4$ und $Z^5$ in bezug auf die Azobrücke angegeben. Ferner bedeutet i = iso, t = tertiär; bei Alkyl- oder Alkoxyresten ohne nähere Angaben handelt es sich um normale, unverzweigte Reste. Alle in den nachfolgenden Tabellen aufgeführten Farbstoffe ergeben beim Färben und Bedrucken von Polyester einen roten Farbton.

TABELLE I

Farbstoffe der allgemeinen Formel I mit den Bedeutungen $Z^4$ = Wasserstoff und $Z^5$ = Wasserstoff und den folgenden Bedeutungen:

| $Z^1$ | $Z^2$ | $Z^3$ |
|---|---|---|
| H | H | 4-$CH_3$ |
| H | H | 4-$C_2H_5$ |
| H | H | 4-$COOC_2H_5$ |
| H | H | 4-$SO_2NH(CH_3)_2$ |
| H | H | 4-$OC_4H_9$(i) |
| H | H | 4-Cl |
| H | H | 4-Br |
| H | H | 4-$COC_3H_7$ |
| p-$CH_3$ | H | 2-F |
| p-$CH_3$ | H | 3-$OCH_3$ |
| o-$CH_3$ | p-$CH_3$ | 3-$CF_3$ |
| o-$CH_3$ | p-$CH_3$ | 2-CN |
| H | H | 2-$COCH_3$ |
| p-$CH_3$ | H | 4-$COC_2H_5$ |
| o-$CH_3$ | p-$CH_3$ | 4-$NO_2$ |
| o-$CH_3$ | p-$CH_3$ | 4-$C_4H_9$ |
| H | H | 4-$C_4H_9$(t) |
| o-$CH_3$ | p-$CH_3$ | 3-$CONH_2$ |
| p-$CH_3$ | H | 4-$CON(CH_3)_2$ |
| o-$CH_3$ | p-$CH_3$ | 4-Cyclohexyl |
| H | H | 3-Cylcopentyl |
| o-$CH_3$ | p-$CH_3$ | 4-$C_3H_7$(i) |
| o-$CH_3$ | p-$CH_3$ | 4-$C_6H_{13}$ |
| H | H | 4-$SO_2CH_3$ |
| p-Cl | H | H |
| p-Cl | H | 4-$OC_4H_9$ |
| p-Br | H | 3-$OC_2H_5$ |
| H | H | 4-$SO_2NH(CH_2)_3OC_4H_9$ |
| H | H | 4-$OCH_3$ |
| H | H | 4-F |

| $Z^1$ | $Z^2$ | $Z^3$ |
|---|---|---|
| H | H | 4-$COOC_3H_7$(i) |
| H | H | 4-$CONHC_2H_5$ |
| H | H | 4-$CON(C_3H_7)_2$ |
| H | H | 4-$CON(CH_3)(CH_2)_2OH$ |
| H | H | 4-$CON((CH_2)_2OCOCH_3)_2$ |
| H | H | 4-$SO_2NHC_5H_{11}$ |
| H | H | 4-$SO_2N(C_4H_9)_2$ |
| H | H | 4-$SO_2CH_3$ |
| H | H | 4-$SO_2(CH_2)_2OH$ |
| H | H | 4-$SO_2(CH_2)_2OCOC_2H_5$ |
| H | H | 4-$SO_2OC_6H_5$ |
| H | H | 2-$CF_3$ |
| H | H | 3-$COOC_2H_5$ |
| H | H | 3-$COO(CH_2)_2C_6H_5$ |
| H | H | 3-$CON(CH_3)_2$ |
| H | H | 3-$SO_2NH_2$ |
| H | H | 3-$SO_2N(C_3H_7)_2$ |
| H | H | 4-$(CH_2)_2OCOCH_3$ |
| H | H | 3-CN |
| p-Cl | H | 3-Br |
| p-Cl | H | 3-$COOC_3H_7$ |
| p-$COOC_2H_5$ | H | H |
| p-CN | H | 4-Cl |
| p-$CH_3$ | H | H |
| p-$SO_2C_2H_5$ | H | 3-$CH_3$ |
| o-$CH_3$ | m-$CH_3$ | H |
| m-$CH_3$ | H | 3-$CH_3$ |
| p-Br | H | H |
| p-F | H | 4-F |
| o-Cl | p-Cl | 3-$CH_3$ |
| o-$COOCH_3$ | p-$COOCH_3$ | H |

Tabelle II

Farbstoffe der allgemeinen Formel I mit den Bedeutungen $Z^1$ = Wasserstoff und $Z^2$ = Wasserstoff und den folgenden Bedeutungen.

| $Z^3$ | $Z^4$ | $Z^5$ |
|---|---|---|
| H | 2-$CH_3$ | H |
| H | 2-Cl | H |
| H | 2-$NO_2$ | H |
| H | 2-$COOCH_3$ | H |
| H | 2-CN | H |
| H | 3-F | H |
| H | 3-Cl | H |
| H | 3-$NO_2$ | H |
| H | 3-$OCH_3$ | H |
| H | 3-$CONC_2H_5$ | H |
| 4-$NO_2$ | 2-Cl | H |
| 4-Cl | 2-$NO_2$ | H |
| 4-$CH_3$ | 2-$NO_2$ | H |
| 4-Cl | 2-Cl | H |
| 4-Cl | 2-$CH_3$ | H |
| 4-Cl | 2-$CF_3$ | H |
| 4-Cl | 3-Cl | H |
| 4-Cl | 3-$CH_3$ | H |
| 4-$CH_3$ | 3-$CH_3$ | H |
| 3-$CH_3$ | 5-$CH_3$ | H |
| 3-Cl | 5-Cl | H |
| 5-$COOCH_3$ | 3-$COOCH_3$ | H |
| 2-Cl | 5-$CH_3$ | H |
| 2-$NO_2$ | 4-$COOC_2H_5$ | H |
| 2-$NO_2$ | 4-$CONHC_6H_{13}$ | H |
| 2-Cl | 4-$SO_3CH_3$ | H |
| 2-Cl | 4-$SO_2N(CH_3)_2$ | 5-Cl |
| 2-Cl | 4-$SO_2N(CH_3)_2$ | 6-Cl |
| 2-$NO_2$ | 4-$SO_2NHC_3H_7$(i) | H |

| $Z^3$ | $Z^4$ | $Z^5$ |
|---|---|---|
| 2-$NO_2$ | 4-$SO_2NH(CH_2)_3OCH_3$ | H |
| 2-Cl | 3-Cl | H |
| 2-Cl | 5-Cl | H |
| 3-Br | 4-Br | H |
| 4-CN | 3-Cl | H |
| 2-Cl | 5-$OCH_3$ | H |
| 2-Cl | 5-$NO_2$ | H |
| 2-Cl | 4-Cl | 5-Cl |
| 2-Cl | 4-$NO_2$ | 6-Cl |
| 2-CN | 5-Cl | H |
| 3-Cl | 4-$CH_3$ | H |
| 4-$NO_2$ | 2-$CH_3$ | H |
| 3-$NO_2$ | 4-$CH_3$ | H |
| 2-$CH_3$ | 4-$CH_3$ | H |
| 2-$CH_3$ | 5-$CH_3$ | H |
| 2-$CH_3$ | 5-$SO_2N(CH_3)_2$ | H |
| 2-Cl | 5-$CONH_2$ | H |
| 3-$COOC_2H_5$ | 2-$NO_2$ | H |
| 2-$OCH_3$ | 5-$COOCH_3$ | H |
| 2-Cl | H | H |
| 3-Cl | H | H |
| 2-$CH_3$ | H | H |

## Tabelle III

Farbstoffe der allgemeinen Formel I mit den Bedeutungen $Z^2$ = Wasserstoff, $Z^3$ = Wasserstoff und $Z^5$ = Wasserstoff und den Bedeutungen:

| $Z^1$ | $Z^4$ |
|---|---|
| p-Cl | 3-$CH_3$ |
| p-Cl | 3-Cl |

P A T E N T A N S P R Ü C H E

1. Bisazofarbstoffe der Formel I

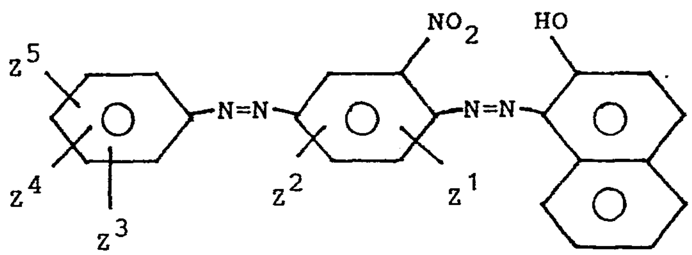

(I)

in der

$Z^1$, $Z^4$, $Z^5$ unabhängig voneinander Wasserstoff, Fluor, Chlor, Brom, Methyl, Ethyl, Methoxy, Ethoxy, Trifluormethyl, Cyan, -COOR, $-CONRR^1$, $-SO_2NRR^1$, $-SO_2R$, -COR oder Nitro,

$Z^2$ Wasserstoff, Fluor, Chlor, Brom, Methyl, Ethyl -COOR, oder $-CONRR^1$,

$Z^3$ Wasserstoff, Fluor, Chlor, Brom, Alkyl mit 1 bis 6 C-Atomen, Cycloalkyl mit 5 oder 6 C-Atomen, Alkoxy mit 1 bis 4 C-Atomen, Trifluormethyl, Cyan, -COOR, $-CONRR^1$, $-SO_2NRR^1$, $-SO_2R$, -COR oder Nitro,

R Wasserstoff, gegebenenfalls substituiertes Alkyl mit 1 bis 6 C-Atomen, Cycloalkyl mit 5 oder 6 C-Atomen, gegebenenfalls substituiertes Phenyl, Alkenyl mit 3 bis 5 C-Atomen,

$R^1$ Wasserstoff, gegebenenfalls substituiertes Alkyl mit 1 bis 6 C-Atomen, Alkenyl mit 3 bis 5 C-Atomen

bedeuten.

2. Bisazofarbstoffe nach Anspruch 1, dadurch gekennzeichnet, daß $Z^1$ Wasserstoff, Fluor, Chlor, Brom, Methyl, Ethyl, Methoxy oder Ethoxy bedeutet.

3. Bisazofarbstoffe nach Anspruch 1 und/oder 2, dadurch gekennzeichnet, daß $Z^2$ Wasserstoff bedeutet.

4. Bisazofarbstoffe nach einem oder mehreren der Ansprüche 1 bis 3, dadurch gekennzeichnet, daß Z3 Wasserstoff, Nitro, Fluor, Chlor, Brom, -COOR, $-CONRR^1$, Trifluormethyl, Methyl, Ethyl oder $-SO_2R$ bedeutet.

5. Bisazofarbstoffe nach einem oder mehreren der Ansprüche 1 bis 4, dadurch gekennzeichnet, daß $Z^4$ Wasserstoff, Chlor, Brom, -COOR oder $-CONRR^1$ bedeutet.

6. Bisazofarbstoffe nach einem oder mehreren der Ansprüche 1 bis 5, dadurch gekennzeichnet, daß $Z^5$ Wasserstoff bedeutet.

7. Bisazofarbstoffe nach einem oder mehreren der Ansprüche 1 bis 6, dadurch gekennzeichnet, daß $Z^1$, $Z^2$ und $Z^5$ Wasserstoff bedeuten und $Z^4$ in 2- oder 3-Stellung zur Azogruppe steht.

8. Bisazofarbstoffe nach einem oder mehreren der Ansprüche 1 bis 7, dadurch gekennzeichnet, daß $Z^1$, $Z^2$, $Z^4$ und $Z^5$ Wasserstoff bedeuten und $Z^3$ in 2-, 3- oder 4-Stellung zur Azogruppe steht.

9. Verfahren zur Herstellung der Bisazofarbstoffe eines oder mehrerer Ansprüche 1 bis 8, dadurch gekennzeichnet, daß ein Amin der Formel IV

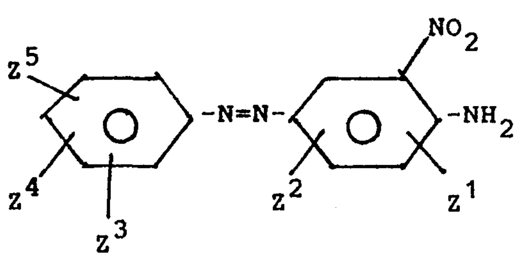

(IV)

diazotiert und auf ß-Naphthol gekuppelt wird.

10. Verwendung der Bisazofarbstoffe eines oder mehrerer Ansprüche 1 bis 8 zum Färben und Bedrucken von hydrophoben Fasermaterialien.

11. Verwendung der Bisazofarbstoffe eines oder mehrerer Ansprüche 1 bis 8 zum Färben von organischen Lösungsmitteln, Mineralölprodukten, Wachsen, Ölen, Fetten, Kunststoffen und Oberflächenbelägen.